# EUROPÄISCHE PATENTSCHRIFT

(11) **EP 1 772 667 B1**
(45) Veröffentlichungstag und Bekanntmachung des Hinweises auf die Patenterteilung: **03.12.2014**
(21) Anmeldenummer: 06121418.5
(22) Anmeldetag: 28.09.2006
(51) Int. Cl.: F21V 5/00, C08L 77/00, F21V 31/04

(54) **Kunststoffbauteil mit integrierter Lichtquelle**
Polymer component with integrated light source
Élément polymère avec des sources de lumière intégrées

(30) Priorität: 04.10.2005 DE 102005047500
(43) Veröffentlichungstag der Anmeldung: 11.04.2007
(73) Patentinhaber: EMS-CHEMIE AG, 7013 Domat-Ems (CH)
(72) Erfinder: Kaisser, Michael, 7203, Trimmis (CH); Hala, Ralf, 88161, Lindenberg (DE); Kägi, Werner, 7013, Domat/Ems (CH)
(74) Vertreter: OK pat AG

(56) Entgegenhaltungen:
- EP-A- 0 952 388
- WO-A-97/16812
- US-A- 5 684 633
- US-A- 5 788 357
- US-B1- 6 354 714

## Beschreibung

Die Erfindung betrifft gemäss dem Oberbegriff des unabhängigen Anspruchs 1 ein Kunststoffbauteil mit einem einschichtigen, aus einer Kunststoff-Formmasse gebildeten und eine transparente oder translucente Matrix aufweisenden Sichtteil und mit einer unter der Oberfläche des Sichtteils angeordneten Lichtquelle, die ein oder mehrere Leuchtelemente umfasst. Der Sichtteil ist im wesentlichen opak gegenüber dem Tageslicht und transparent oder translucent gegenüber dem von den Leuchtelementen ausgestrahlten Licht ausgebildet und enthält zugemischte Effektpigmente. Der Sichtteil definiert damit ein Oberflächenerscheinungsbild, welches bei inaktiver Lichtquelle dem Oberflächenerscheinungsbild der übrigen Wand eines Objekts, in welche das Kunststoffbauteil eingebaut ist, weitestgehend entspricht und welches bei aktiver Lichtquelle im wesentlichen durch die Lichtquellenaktivität bestimmt ist.

Solche Lichtquellen, die nur im aktiven Zustand sichtbar werden, sonst aber praktisch nicht wahrgenommen werden können, sind z.B. aus dem Automobilbau bekannt, wo sie beispielsweise als tagsüber unauffällige Türgriffbeleuchtung oder als versteckte Blinker Anwendung finden. Die dafür notwendigen Kunststoffbauteile werden bevorzugt aus thermoplastisch verarbeitbaren Kunststoff-Formmassen mit zumindest einem Sichtteil hergestellt, welcher üblicherweise als hinterspritzte Folie mit allfälligen Dekoreigenschaften ausgebildet ist.

Der Einsatz von Leuchtdioden (LED) als eine bevorzugte Lichtquelle ist z.B. im Automobilbau aus DE 198 05 771 A1 und aus DE 197 22 958 A1 bekannt. Dort werden Glühlampen zum Beleuchten eines Beleuchtungsfeldes, wie z.B. des Bodens neben dem Fahrzeug oder zum Beleuchten eines Schaltelements, durch Leuchtdioden ersetzt, weil diese LEDs weniger elektrische Energie verbrauchen und weniger Hitze entwickeln. Zudem übertrifft die Lebensdauer einer LED die Lebensdauer eines Fahrzeuges im allgemeinen. Zum Beleuchten des unmittelbaren Umfeldes eines Automobils können gemäss DE 199 28 201 A1 Leuchtdioden auch mit Lichtleitern kombiniert werden. Gemäss DE 199 47 752 A1 werden LEDs als indirekte Beleuchtung von Funktionselementen, wie z.B. Griffmulden von Automobiltüren eingesetzt.

Die Verwendung von Leuchtdioden ist auch aus technischen Bereichen bekannt, die nicht zum Fahrzeugsektor gehören. So sind z.B. LEDs mit einstellbarer, anwendungsbezogener Lichtstärkeverteilung in der Umgebung der optischen Achse aus dem deutschen Gebrauchsmuster DE 20 2004 000 004 U1 im Zusammenhang mit Beleuchtungen für Museen, Schaufenster, Vitrinen und dergleichen bekannt. Als Alternative zur Verwendung von LEDs in Hausinstallationen sind aus dem deutschen Gebrauchsmuster DE 85 33 229 U1 Leuchtstoffröhren bekannt, welche als Beleuchtung von teildurchsichtigen oder durchsichtigen Türgriffen eingesetzt werden.

Einerseits hat sich der Einsatz von Folien im Automobilbau bewährt, andererseits ist dieser Einsatz sehr aufwändig, weil es bisher keine Folie gibt, die für alle Karosseriebereiche eines Automobils mit ihren extrem unterschiedlichen Anforderungen geeignet wäre (vgl. VDI-Gesellschaft für Kunststofftechnik B 4270: KUNSTSTOFFE IM AUTOMOBILBAU, VDI Verlag GmbH, Düsseldorf 2005, Bericht über die Tagung in Mannheim vom 9.-10. März 2005, Beitrag "Folientechnik im Automobilbau - ein Vergleich", siehe Seiten 145-159).

Aus DE 693 31 711 T2 ist eine Beleuchtungseinrichtung zur Kontrolle von Lichtreflexionen von reflektierenden Oberflächen offenbart. In einem bevorzugten Aspekt bezieht sich dieses Dokument auf eine Beleuchtungseinrichtung, wie sie beispielsweise an einem Kraftfahrzeug verwendet wird. Diese Beleuchtungseinrichtung kann eine ästhetisch ansprechendere Form bieten und die Reflexion von einfallendem Licht effektiver handhaben als bisher bekannte Einrichtungen. Dieses Dokument offenbart eine Beleuchtungs- oder Signaleinrichtung (z.B. Fahrzeugbeleuchtung), die im ausgeschalteten Zustand Teil eines opaken Körpers des Fahrzeugs ist, die im eingeschalteten Zustand die Beleuchtungs- oder Signalfunktion erfüllt.

Aus US 5,684,633 ist die Verwendung von mehrschichtigen, reflektierenden Polymerkörpern insbesondere in der Automobil-Industrie bekannt. Solche Polymerkörper werden verwendet, um das Erscheinungsbild von Fahrzeugen oder auch anderen Produkten wie Kühlschränken zu verändern. Der Polymerkörper besteht dabei aus zumindest zwei verschiedenen Polymeren, die zwei parallele Schichten bilden, und wird mittels Thermoformung hergestellt. Polyurethan oder Polymethylmethacrylat eignen sich insbesondere für solche Mehrschicht-Polymerkörper.

Ebenfalls aus der Automobil-Branche bekannt sind mehrschichtige Rückspiegelanordnungen, die typischerweise einen semi-transparenten, nicht-dichroitischen Spiegel z.B. aus Autoglas oder auch Polycarbonat umfassen. Dieser Spiegel wird durch Aufbringen einer Chromschicht auf einer seiner Oberflächen hergestellt, so dass er ca. 1% bis 8% des sichtbaren Lichts passieren lässt und ca. 35% bis 58% des sichtbaren Lichtes reflektiert. Eine solche mehrschichtige Spiegelanordnung kann sowohl als herkömmlicher Rückspiegel in dem Fahrzeug als auch als optischer Signalgeber verwendet werden.

Aus DE 696 04 502 T2 ist ferner eine mehrschichtige Anzeigetafel bekannt. Diese Anzeigetafel umfasst eine erste, zumindest teilweise durchsichtige Schicht, eine zweite Schicht, von der zumindest ausgewählte Bereiche einen bestimmten Kontrast (Opazität, Farbe) bewirken und eine dritte Schicht, welche die erste und zweite Schicht verbindet. Zudem weist die erste Schicht einen Überzug mit einem durchsichtigen Träger auf, in den lichtmodifizierende Partikel eingelagert sind.

Die Aufgabe der vorliegenden Erfindung besteht darin, ein alternatives Kunststoffbauteil vorzuschlagen, in welches eine Lichtquelle integriert ist, die im eingeschalteten Zustand eine Signalfunktion erfüllt, die jedoch im inaktiven Zustand nicht als solche erkennbar ist. Dabei soll auch ein normales Leuchten als Signal im weitesten physikalischen Sinn verstanden werden.

Diese Aufgabe wird durch die Merkmale des unabhängigen Anspruchs 1 gelöst, indem ein Kunststoffbauteil mit einem einschichtigen, aus einer Kunststoff-Formmasse gebildeten und eine transparente oder translucente Matrix aufweisenden Sichtteil und mit einer unter der Oberfläche des Sichtteils angeordneten Lichtquelle vorgeschlagen wird. Diese Lichtquelle umfasst ein oder mehrere Leuchtelemente, wobei der Sichtteil im wesentlichen opak gegenüber dem Tageslicht und transparent oder translucent gegenüber dem von den Leuchtelementen ausgestrahlten Licht ausgebildet ist. Der Sichtteil enthält zugemischte Effektpigmente und definiert ein Oberflächenerscheinungsbild, welches bei inaktiver Lichtquelle dem Oberflächenerscheinungsbild der übrigen Wand eines Objekts, in welche das Kunststoffbauteil eingebaut ist, weitestgehend entspricht und welches bei aktiver Lichtquelle im wesentlichen durch die Lichtquellenaktivität bestimmt ist. Das erfindungsgemässe Kunststoffbauteil ist dadurch gekennzeichnet, dass die Leuchtelemente ausgewählt sind aus einer Gruppe, welche Leuchtdioden (LEDs), organische Leuchtdioden (OLEDs) und faseroptische Lichtsysteme umfasst, wobei die Leuchtelemente zumindest teilweise in die Kunststoff-Formmasse des Sichtteils eingebettet sind.

Besonders bevorzugte Weiterbildungen des erfindungsgemässen KunststoffBauteils und besonders bevorzugte Verwendungen desselben sowie weitere erfinderische Merkmale ergeben sich jeweils aus den abhängigen Ansprüchen. Faseroptische Lichtsysteme umfassen Lichtwellenleiter, die z.B. von ausserhalb des Kunststoffbauteils gespeist werden. Besonders bevorzugt als Leuchtelemente sind Leuchtdioden (LEDs).

Die erfindungsgemässen Sichtteile der Kunststoffbauteile bieten gegenüber den aus dem Stand der Technik bekannten Folien, die - um insbesondere den hohen Qualitätsanforderungen der Automobilindustrie zu genügen - vorgeformt und hinterspritzt werden müssen, den Vorteil einer einfacheren Herstellung bei gleicher oder sogar besserer Qualität. Insbesondere bei tiefgezogenen Folien treten oft Risse bzw. Stauch- oder Sprödstellen auf, welche die Qualität und den Gesamteindruck der damit hergestellten Objekte beeinträchtigen. Somit können mit der vorliegenden Erfindung Kosten gespart und die optische Qualität der Bauteile verbessert werden, was die Marktchancen der erfindungsgemässen Kunststoffbauteile zusätzlich erhöht.

Derartige Kunststoffbauteile finden insbesondere, jedoch keineswegs ausschliesslich, bei Kraftfahrzeugen - beispielsweise als Aussenspiegelgehäuse oder Aussentürgriffe - Verwendung. Dabei ist es häufig aus ästhetischen Gründen erforderlich, dass diese Kunststoff-Bauteile mit einer Oberfläche versehen sind, welche in ihrer Farbe bzw. in ihrer optischen Wirkung der Oberfläche eines Fahrzeuges entspricht. Wenn es sich um Oberflächen handelt, die einen Metallic-, Interferenz-, Perlmutt- oder Opaleszenz-Effekt hervorrufen sollen, werden besonders hohe Anforderungen an die die Oberfläche bestimmende Schicht gestellt. Zudem sollen solche Bauteile eine Oberfläche aufweisen, die besonders kratzfest und witterungsbeständig ist. Ausserdem sollen solche Bauteile aber auch besonders gute mechanische Eigenschaften, insbesondere eine hohe Schlagzähigkeit, aufweisen.

Bevorzugte Kunststoffbauteile sind dadurch gekennzeichnet, dass der Sichtteil durch Spritzgiessen oder durch ein Sonderverfahren des Spritzgiessens (z.B. Spritzprägen) hergestellt ist und eine Sichtfläche sowie eine davon abgewandte Anspritzfläche mit zumindest einer Anspritzstelle aufweist. Solche Kunststoffbauteile umfassen in einer ersten bevorzugten Variante einen Sichtteil, welcher an der Rückseite mit einer Aussparung oder Aussparungen für die Aufnahme des Leuchtelements oder der Leuchtelemente ausgestattet ist.

Der Sichtteil kann auf der Sichtfläche zusätzlich eine transparente oder translucente Oberflächenschicht ohne Effektpigmente aufweisen. Effektpigmente sind auch in diesem Fall nur im (hier darunter liegenden) Sichtteil enthalten. Diese Oberflächenschicht kann direkt beim Spritzgiessen oder auch nachträglich, z.B. als Schutzlackierung aufgebracht werden. Diese zusätzliche Oberflächenschicht und/oder der Sichtteil können an Stelle einer konstanten Dicke alternativ eine Profilierung aufweisen. Diese Profilierung kann an einer oder an beiden Oberflächen des Sichtteils bzw. an der Oberfläche der zusätzlichen Oberflächenschicht ausgeführt sein. So können die mit den Leuchtelementen unterlegten Bereiche zumindest teilweise reliefartig ausgebildet sein, wobei dieses Relief durch die aktiven Lichtquellen vorzugsweise an bestimmten Stellen, wie z.B. an den Kanten, betont wird. Durch Anordnen des Reliefs an der Sichtfläche des Sichtteils und durch Ausgleichen der Unebenheiten dieses Reliefs mit der zusätzlichen Oberflächenschicht kann der Reliefeffekt erzielt, aber die äussere Oberfläche des Bauteils trotzdem glatt hergestellt werden, so dass dieses Kunststoffbauteil weniger auf Verschmutzung anfällig bzw. einfacher zu reinigen ist.

Kunststoffbauteile einer zweiten Variante umfassen bevorzugt ein zusätzliches Basisteil, welches sich in der Zusammensetzung und in den physikalischen und chemischen Kunststoffeigenschaften vom Sichtteil unterscheiden kann oder ein identisches Polymer umfasst, wobei das Basisteil des Kunststoffbauteils auf zumindest einen Teil der Anspritzfläche des zuvor erstarrten Sichtteils spritzgegossen ist. Somit wird das Kunststoffbauteil gemäss der zweiten bevorzugten Variante vorzugsweise mittels einer Zwei- oder Mehr-Komponenten-Technik hergestellt. Auch hier ist das Anbringen einer zusätzlichen Oberflächenschicht auf der Sichtfläche des Sichtteils möglich, wie zuvor erläutert.

Die Leuchtelemente, insbesondere wenn es sich dabei um Leuchtdioden handelt, sind vorzugsweise zumindest teilweise stoff- und/oder formschlüssig in die Kunststoff-Formmasse des Sichtteils eingebettet, z.B. umspritzt oder eingegossen. Des Weiteren wird bevorzugt, dass das Kunststoffbauteil mit seiner Sichtfläche oberflächenbündig in die Wand eines Objekts eingebaut ist. Der Betrieb von Leuchtdioden in oder an Objekten ohne Anschluss an die öffentliche Stromversorgung kann dank dem geringen Stromverbrauch der LEDs mittels photovoltaischer Energieerzeugung aus Sonnenlicht sichergestellt werden. Zur Pufferung oder zur alleinigen Stromversorgung können dabei zudem oder alternativ Akkumulatoren verwendet werden. Vielfach wird die Aktivierung der Leuchtelemente erst unterhalb einer minimalen Umgebungshelligkeit oder in der Dunkelheit vollzogen, weil die Leuchtelemente in den erfindungsgemässen Kunststoffbauteilen erst dann ihre grösste Wirkung entfalten.

Ein "Objekt" im Sinne der vorliegenden Erfindung kann ein beliebiges Fahrzeug, wie z.B. ein Flugzeug, ein Automobil, ein Roller oder ein Schiff sein. Weitere "Objekte" umfassen Signaleinrichtungen, wie Signaltafeln, Signalpfähle oder Ampeln sowie Werbeträger, wie Litfasssäulen, Werbetafeln, verborgene Displays und dergleichen. Design- und/oder Verkleidungselemente an Bauten, Verkehrswegen oder Fahrzeugen werden den "Objekten" ebenso zugeordnet wie Sport- und/oder Freizeitgeräte, Modeaccessoires, Spielzeuge bzw. Teile derselben.

Als "Wand" wird hier der sichtbare Oberflächenbereich (aussen und gegebenenfalls auch innen) einer Struktur bezeichnet. Solche Strukturen umfassen Kabinen, Gehäuse, sowie Gehäuseteile und/oder andere Teile von Elektro-, Elektronik-, Telekommunikations-, Sicherheitstechnik-, Medizinaltechnik-, Haushalts- oder Körperpflegegeräten. Auch die Oberflächen von Möbeln und Verpackungsteilen werden hier den "Wänden" zugerechnet.

Im erfindungsgemässen Kunststoffbauteil ist die Lichtquelle vorzugsweise als signalgebende Lichtquelle ausgebildet, wobei dieses Signal ausgewählt ist aus einer Gruppe, welche Blinklichter sowie das Anzeigen von stehenden oder bewegten Bildern umfasst. Zur Erzeugung von Bildern werden erfindungsgemäss grossflächige LED-Module, mit einem Raster aus einfarbigen (schwarz/weiss Darstellung) oder verschiedenfarbigen (z.B. RGB Farbdarstellung mit theoretisch 16.7 Millionen Farbvarianten) eingesetzt. Die LEDs sind dann vorzugsweise in einem Array zum Erzeugen eines Bildes angeordnet, wobei jede LED beispielsweise gerade einem Pixel eines zu erzeugenden Bildes entspricht. Ein solches Array kann auch als "LED cluster" bezeichnet und zum Anzeigen von Videosignalen bzw. Video-Filmsequenzen werden, wie es von der My-tronic GmbH (D-54497 Morbach, Deutschland) angeboten wird. Besonders bevorzugt sind LEDs mit besonders hoher Lichtintensität, so dass Bilder mit guter Sichtbarkeit und starkem Kontrast erzeugt werden können. Selbstverständlich kann durch den Einsatz von LEDs mit kleinerer Ausdehnung die Auflösung der Bilder gesteigert oder das Bild bei gleicher Auflösung verkleinert werden. Bilder darstellende LED-Module oder LED cluster werden vorzugsweise mit einem Rechner oder einem elektronischen Steuergerät angesteuert; der Rechner kann ein tragbarer Computer (z.B. ein Laptop, Notebook oder Handy), ein zusätzlich in ein Objekt bzw. Fahrzeug eingebauter Computer oder der Bordcomputer des Fahrzeuges selbst sein. LED-Module können auch als lineare Arrays mit hintereinander angeordneten LEDs ausgebildet sein und eine Lichterkette bilden.

Als "Blinklichter" gelten im Zusammenhang mit der vorliegenden Erfindung Richtungsanzeiger bei Fahrzeugen, Warnblinker oder Warnleuchten bei Fahrzeugen oder feststehenden Einrichtungen (wie Strassenschilder und dergleichen), blinkende Signale (wie z.B. farbige Männchen bei Ampeln, Fahrtrichtungspfeile und dergleichen) und andere optische Alarmsignale (wie z.B. das Blinksignal einer Einbruch-Alarmanlage).

"Bilder" können einfarbig oder mehrfarbig sein. Als "stehende Bilder" gelten z.B. Richtungspfeile bei Strassensignalen. Als "bewegte Bilder" gelten Darstellungen mit variierendem farblichen und/oder informativen Inhalt, wie ineinanderfliessende oder pulsierende Farben, Kurzfilme, Logos, Wappen, Werbeschriften, umlaufende Leuchtschriften und dergleichen.

Im Zusammenhang mit der vorliegenden Erfindung werden "Effektpigmente" als in einer Polymermatrix vorliegende, unlösliche Partikel definiert. Je nach ihrer Art, Grösse und aktuellen Konzentration oder Verteilung im erfindungsgemässen Kunststoffbauteil reflektieren, streuen oder absorbieren solche Effektpigmente zumindest teilweise die einfallenden elektromagnetischen Wellen (insbesondere im sichtbaren Wellenlängenbereich, im UV- oder IR- bzw. NIR- Bereich) oder beeinflussen diese Wellen in irgend einer Weise. Damit bleibt bei normalem Tageslichteinfall die darin bzw. darunter verborgene Technik der erfindungsgemässen Kunststoffbauteile, also die einzelne Lichtquelle oder die Vielzahl der Lichtquellen in ihrem jeweils inaktiven Zustand, dem durchschnittlichen Auge verborgen oder zumindest verschleiert. Schon bei Tageslicht, eindrücklicher und ausgeprägter jedoch bei nachlassendem oder fehlendem Tageslicht, werden dann aber die aktivierten Lichtquellen bzw. die durch diese erzeugten Blinklichter oder Bilder sichtbar.

NIR-empfindliche Additive können auch, z.B. beim Laserschweissen oder Laserbeschriften, zum Bearbeiten von Kunststoffen, insbesondere von erfindungsgemässen Kunststoffbauteilen verwendet werden. Als Effektpigmente sind z.B. Metallteilchen, Aluminium/Bronze-Pulver, Interferenzpigmente, natürliche (ungefärbte) und farbig lackierte Aluminiumflitter und mineralischer Glimmer speziell für den Einsatz in transparenten Kunststoffen bekannt (siehe Schäfer/Küsters im Kapitel 1.3: Rohstoffe für Masterbatches in FARB- UND ADDITIV-MASTERBATCHES IN DER PRAXIS, 2003 herausgegeben vom Masterbatch Verband im Verband der Mineralfarbenindustrie e.V., Frankfurt am Main, Deutschland). Diese Autoren weisen auch auf das Auftreten von Fliessnähten beim Einsatz von extrem feinen Perleffektpigmenten hin. Aluminium- und Goldbronze Pigmente sind z.B. unter dem Handelsnamen PHOENIX^{®} (ECKERT GmbH & Co. KG, Fürth, Deutschland) erhältlich. Zudem sind Perlglanzpigmente bzw. Perlmuttpartikel bekannt, welche für den gleichen Zweck im Sichtteil eingesetzt werden können; in solchen Fällen wird eine Dunkelfärbung eines eventuellen Basisteils bevorzugt. Speziell bevorzugt sind Metallicpigmente, insbesondere Aluminiumflitter (vgl. EP 0 994 915), oder Perlmuttpartikel. Auch beliebige Mischungen dieser Effektpartikel sind einsetzbar. Die Effektpartikel werden bevorzugt als Farbkonzentrat vorgemischt und als Masterbatch oder Flüssigdispersion in den Einzug einer Spritzgussschnecke dosiert.

Die Kunststoff-Formmasse für den Sichtteil umfasst bevorzugt zumindest ein transparentes Polymer, das aus einer Gruppe von Polymeren ausgewählt ist, welche aliphatische, cycloaliphatische und/oder aromatische Monomere umfassende Polyamide, wie PA MACM 12, PA PACM 12 (vgl. jeweils auch die veröffentlichte Patentanmeldung JP 11 279 289); COC (Cyclische Olefin-Copolymere); PMMA (Polymethylmethacrylat); PMMI (Polymethylmethacrylimid); Polyester (diverse Homopolyester, Copolyester und deren Blends); PC (Polycarbonat) sowie Polycarbonatcopolymere und deren Blends; PS (Polystyrol) und ABS (Acrylnitril-Butadien-Styrol-Polymerisate); SAN (Styrolacrylnitril); ASA (Acrylnitril-Styrol) und andere Styrolcopolymere und deren Blends; Celluloseester, wie z.B. CA, CP und CAB; PI (Polyimide) und PEI (Polyetherimide), Polysulfone und Polyethersulfone (PES,PSU,PPSU), Polyphenylene (PPO, PPE), Polyacrylate (PAR) sowie Mischungen oder Blends dieser Polymere umfasst.

Vorzugsweise werden für die erfindungsgemässen Formmassen auch an sich bekannte transparente Polyamide (die auch in Form von Copolyamiden vorliegen können) verwendet, welche beispielsweise aus Monomeren ausgewählt aus folgender Gruppe hergestellt sind:
- verzweigte oder unverzweigte aliphatische Diamine mit 6 bis 14 C-Atomen, wie z.B. 1.6-Hexamethylendiamin, 2-Methyl-1.5-diaminopentan, 2.2.4-Trimethylhexamethylendiamin, 1.9-Nonamethylendiamin, 1.10-Decamethylendiamin, oder 1.12-Dodecamethylendiamin;
- cycloaliphatische Diamine mit 6 bis 22 C-Atomen, wie z.B. 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)-cyclohexan, 2.6-Bis(aminomethyl)-norbornan oder 3-Aminomethyl-3.5.5-trimethylcyclohexylamin;
- araliphatische Diamine mit 8 bis 22 C-Atomen, wie z.B. m- oder p-Xylylendiamin oder Bis(4-aminophenyl)propan;
- verzweigte oder unverzweigte aliphatische Dicarbonsäuren mit 6 bis 22 C-Atomen, wie z.B. Adipinsäure, 2.2.4- bzw. 2.4.4-Trimethyladipinsäure, Azelainsäure, Sebacinsäure oder 1.12-Dodecandisäure;
- cycloaliphatische Dicarbonsäuren mit 6 bis 22 C-Atomen, wie z.B. Cyclohexan-1.4-dicarbonsäure, 4.4'-Dicarboxyldicyclohexylmethan, 3.3'-Dimethyl-4.4'-dicarboxyldicyclohexylmethan, 4.4'-Dicarboxyldicyclohexylpropan und 1.4-Bis(carboxymethyl)cyclohexan;
- araliphatische Dicarbonsäuren mit 8 bis 22 C-Atomen, wie z.B. 4.4'-Diphenylmethandicarbonsäure;
- aromatische Dicarbonsäuren mit 8 bis 22 C-Atomen, wie z.B. Isophthalsäure, Tributylisophthalsäure, Terephthalsäure, 1.4-, 1.5-, 2.6- bzw. 2.7-Naphthalindicarbonsäure, Diphensäure oder Diphenylether-4,4'-dicarbonsäure;
- dimerisierte Fettsäuren mit bis zu 44 C-Atomen, bevorzugt mit 36 C-Atomen;
- Lactame mit 6 bis 12 C-Atomen bzw. die entsprechenden ω-Aminocarbonsäuren, wie z.B. ε-Caprolactam, ε-Aminocapronsäure, Capryllactam, ω-Aminocaprylsäure, ω-Aminoundecansäure, Laurinlactam oder ω-Aminododecansäure.

Besonders bevorzugt sind dabei transparente Homopolyamide wie PA MACM 12 und PA PACM 12 sowie die transparenten Copolyamide PA 12/MACMI und PA MACM/PACM 12 sowie Mischungen oder Blends derselben. Ganz speziell bevorzugt ist PA MACM/PACM 12, welches aus EP 1 369 447 bekannt ist. Auch aus teilkristallinen Polymeren, wie z.B. Polypropylen, gesättigten linearen Polyestern (z.B. PET) und linearen aliphatischen Polyamiden (z.B. PA 6, PA 66, Mischungen aus PA 6 und PA 66, PA 11, PA 12) können unter geeigneten Prozess- bzw. Abkühlbedingungen und/oder Herstellen geeigneter Schichtdicken, translucente oder gar transparente, erfindungsgemässe Sichtteile hergestellt werden.

Handelsübliche Additive, wie beispielsweise Weichmacher, Antistatika, Flammschutzmittel, Füllstoffe, Farbstoffe, Duftfarben bzw. Duftstoffe, Stabilisatoren (z.B. Hitze- und UV-Stabilisatoren und/oder UV-Absorber) und Pigmente werden der Kunststoff-Formmasse für den Sichtteil je nach Erfordernis beigemischt. In Frage kommen auch Verstärkungsmittel, wie Glasfasern, Glaskugeln und mineralische Zuschlagstoffe (insbesondere nanoskalige Mineralien bzw. Nanocomposites), solange der optische Eindruck des Sichtteils dadurch nicht gestört wird.

Diese an sich aus dem Stand der Technik bekannten Formmassen werden zu einem Kunststoffbauteil verarbeitet, welches zumindest ein Sichtteil und eventuell ein Basisteil umfasst, wobei die Kunststoff-Formmasse für den Sichtteil eine transparente oder translucente Matrix mit zugemischten Effektpigmenten umfasst. Die Effektfarbstoffteilchen bzw. Effektpigmente werden z.B. als Farbkonzentrat vorgemischt und als Masterbatch oder Flüssigdispersion in den Einzug einer Spritzgussschnecke dosiert. Alternativ dazu wird vor dem Spritzgiessen (z.B. durch Compoundieren) ein entsprechendes Kunststoff-Granulat hergestellt und dieses Granulat so an der Spritzgussmaschine eingesetzt. Die eventuell vorhandenen Basisteile können dabei andere physikalische und/oder chemische Kunststoffeigenschaften aufweisen als die Sichtteile. Sichtteil(e) und Basisteil(e) können aber auch eine identische Polymermatrix aufweisen. Das optionale Basisteil kann als ein Montagerahmen für den Sichtteil und den Print für die LED-Ansteuerung, aber auch als Gehäuse ausgebildet sein, welches die LEDs, den Print, allfällige weitere Installationen, wie Akkumulatoren oder Batterien, Kühlelemente und dergleichen sicher einschliesst.

Wesentliche Eigenschaften eines Sichtteils umfassen dabei folgende Aspekte:
- Hohe Beständigkeit gegenüber Ultraviolettbestrahlung, Hitze, Licht, Feuchtigkeit, Kälte und Chemikalien; hohe Kratzfestigkeit, hohe Schlagzähigkeit und hoher Glanz.
- Die Effektpigmente rufen, falls sie in einer solchen Matrix verteilt sind, einen Metallic- oder einen Interferenzeffekt, wie z.B. einen Perlmutt-Effekt hervor.
- Je durchscheinender oder transparenter diese Matrix ist, desto klarer kommt der Farbeffekt, insbesondere ein Glitzern der einzelnen Effektteilchen, zur Geltung.
- Die Tiefenwirkung der Effektpigmente hängt von der Transparenz der Matrix ab. Es können aber auch nur unvollkommen transparente oder durchscheinende, d.h. translucente Matrixmaterialen eingesetzt werden.
- Wahlweise können der Kunststoff-Formmasse für den Sichtteil zusätzlich auch andere (z.B. lösliche) Farbstoffe beigemischt werden, so dass z.B. eine beliebige, den Effektpigmenten und/oder der übrigen Wand des Objekts angepasste, transparente Farbtönung erzielt werden kann.

Zum Herstellen von gewissen Varianten des erfindungsgemässen Kunststoffbauteils wird in der anhängigen Schweizer Patentanmeldung des gleichen Anmelders vom 24. September 2004 mit der Anmeldenummer: CH 2004 01563/04 sowie in der US-Provisional Application vom 24. September 2004 mit der Anmeldenummer: US 60/612,639 ein geeignetes Verfahren offenbart. Dieses Spritzgussverfahren ist zudem in der unter der Nummer EP 1 640 134 A1 veröffentlichten europäischen Patentanmeldung offenbart, welche die Priorität dieser beiden unpublizierten Anmeldungen beansprucht. Dieses Spritzgussverfahren ist zum Herstellen von Kunststoff-Bauteilen aus thermoplastisch verarbeitbaren Kunststoff-Formmassen mit zumindest einem Sichtteil und zumindest einem Funktionsteil oder Basisteil geeignet, wobei die Kunststoff-Formmasse für den Sichtteil eine transparente oder translucente Matrix mit zugemischten Effektpigmenten umfasst, und wobei die Funktionsteile oder Basisteile andere physikalische oder chemische Kunststoffeigenschaften aufweisen können als die Sichtteile. Dieses Spritzgussverfahren umfasst die folgenden Schritte:
a) Spritzgiessen und Erstarren lassen der Kunststoff-Formmasse des zumindest einen Sichtteils mit einer Sichtfläche und einer davon abgewandten Anspritzfläche in einer ersten Form mit einer ersten Kavität, welche durch eine erste Sichtformhälfte und eine erste Anspritzformhälfte definiert wird;
b) Öffnen der ersten Form entlang einer Trennebene durch Wegbewegen der ersten Sichtformhälfte von der ersten Anspritzformhälfte;
c) Schliessen einer zweiten Form mit dem zumindest einen Sichtteil in einer zweiten Kavität, welche durch eine Aufnahmeformhälfte mit dem Sichtteil und eine zweite Anspritzformhälfte definiert wird;
d) Spritzgiessen und Erstarren lassen der Kunststoff-Formmasse des Funktionsteils oder Basisteils auf zumindest einen Teil der Anspritzfläche des zumindest einen Sichtteils unter Eingehen einer Verbundhaftung zwischen Sichtteil und Funktionsteil oder Basisteil; und
e) Öffnen der zweiten Form und Entnehmen des Bauteils.

Falls die Leuchtelemente (insbesondere wenn es sich dabei um Leuchtdioden handelt) nicht wie weiter oben beschrieben zumindest teilweise stoff- und/oder formschlüssig in die Kunststoff-Formmasse des Sichtteils eingebettet sind, so wird bei der vorliegenden Erfindung im Falle des Vorsehens eines Basisteils nur ein Teil der Anspritzfläche des Sichtteils mit Basismaterial belegt. Die restliche Fläche muss dann frei bleiben, um direkt an der Rückseite des Sichtteils das Leuchtelement oder die Leuchtelemente anbringen zu können.

Für die Herstellung des Basisteils eignen sich spritzgussfähige Thermoplaste aus der Gruppe der Polyamide, Polyester, Polycarbonate, Polyolefine, sowie thermoplastische Elastomere, wie z.B. TPU (thermoplastisches Polyurethan); Styrolblockcopolymere, wie z.B. SEBS (Styrolethylenbutadienstyrol) oder SBS (Styrolbutadienstyrol); Polyesterelastomere, Polyetherelastomere, Polyetheresterelastomere (TEEE); Silikone, die hinterher vernetzt werden; ABS (Acrylnitril-Butadien-Styrol-Polymerisate) oder PVC. Thermoplastische Elastomere werden insbesondere dann verwendet, wenn der Funktionsteil oder das Basisteil eine Dichtung darstellt. Es ist auch möglich, das Basisteil aus Blends oder den Recycling-Produkten der eben genannten Polymere oder aus deren untereinander verträglichen oder verträglich gemachten Blends herzustellen.

Handelsübliche Additive, wie Schlagzähmodifikatoren, Stabilisatoren (z.B. UV- und Hitzestabilisatoren), Weichmacher, Farbstoffe, Flammschutzmittel, Füllstoffe, Verstärkungsmittel (z.B. Glasfaser, Kohlefasern, Glimmer, Glaskugeln) und/oder Pigmente werden der Kunststoff-Formmasse für das Basisteil je nach Erfordernis beigemischt.

Wesentliche Eigenschaften eines Basisteils umfassen dabei folgende Aspekte:
- Hohe Schlagzähigkeit, mechanische Steifheit, Formbeständigkeit, und Dimensionsstabilität.
- Gute Verträglichkeit (Kompatibilität) mit der Kunststoff-Formmasse des Sichtteils.
- Ausreichende mechanische Festigkeit, hervorragende Kriechbeständigkeit, hohe Temperaturbeständigkeit.
- Gegebenenfalls sind auch elektrische Eigenschaften zu berücksichtigen.

Nachdem einmal das Material für den Sichtteil festgelegt worden ist, wird bei Kunststoffbauteilen mit Basisteil mit Blick auf eine gute Verbundhaftung vorzugsweise ein Material für das Basisteil ausgewählt, welches der selben Polymerklasse angehört, oder welches gar identisch ist mit dem Polymer des Sichtteils. Wenn z.B. für den Sichtteil PA MACM 12 (erhältlich bei EMS-Chemie AG, Domat/Ems, Schweiz, unter dem Namen Grilamid^{®} TR 90) ausgewählt wird, wird in Bezug auf die gute Verbundhaftung für das Herstellen des Basisteils z.B. vorzugsweise ein PA MACM 12 GF 40 (Formmasse aus Grilamid^{®} TR 90 mit 40% Glasfaseranteil) verwendet, welches unter dem Handelsnamen Grilamid^{®} TRV-4X9 bei EMS-Chemie AG, Domat/Ems, Schweiz erhältlich ist.

Zum bereits erwähnten Sichtteil aus Grilamid^{®} TR 90 kann alternativ ein stofflich unterschiedliches Polymer als Kunststoff-Formmasse für das Basisteil verwendet werden, nämlich z.B. ein glaskugelverstärktes Polyamid 12, d.h. beispielsweise ein PA 12 GK 50 (Formmasse aus Polyamid 12 mit 50% Glaskugelanteil). Als Kunststoff-Formmasse für das Basisteil sind auch Blends geeignet, bei denen zumindest eine der Blendkomponenten für die Verbundhaftung zum Sichtteil sorgt. Bevorzugt ist dabei diese Blendkomponente identisch mit einer Polymerkomponente des Sichtteils.

Falls Sichtteil und Basisteil ganz oder teilweise zueinander unverträglich sein sollten, d.h. eine naturgemäss ungenügende Verbundhaftung eingehen, kann ihre Verträglichkeit mit haftungsvermittelnden Modifikatoren wie beispielsweise Polyolefinen mit reaktiven Gruppen verbessert werden (vgl. EP 0 393 409 B1), die der Formmasse des Basisteils und/oder der Formmasse des Sichtteils zugemischt werden. Der Sichtteil wird bevorzugt mit einer im wesentlichen gleichmässigen Schichtdicke hergestellt. Dies kann - je nach Geometrie des zu formenden Sichtteils - unter Verwendung von nur einer Einspritzdüse geschehen, welche jedoch immer auf der von der Sichtfläche abgewandten Seite angeordnet sein muss. Die Lage der Anspritzstelle kann optimal im Hinblick auf ein strömungsgünstiges und gleichmässiges Füllen der Spritzgusskavität gewählt werden, so dass keine Unregelmässigkeiten wie Fliesslinien und/oder Bindenähte entstehen. Das strömungsgünstige Füllen der Kavität ermöglicht eine so gleichmässige Verteilung der Kunststoff-Formmasse mit den zugemischten Effektpartikeln, dass diese Anspritzstelle am fertigen Bauteil nicht erkennbar ist. Zudem wird durch die im wesentlichen gleichmässige Dicke des Sichtteils ein homogener optischer Eindruck und eine gleichmässige Farbtiefe und Deckkraft erzeugt. Diese Deckkraft kann durch ein Einfärben des den Sichtteil zumindest teilweise tragenden Basismaterials erhöht werden.

Vorzugsweise umfasst das erfindungsgemässe Kunststoffbauteil somit zumindest ein transparentes Polymer für den Sichtteil, das aus einer Gruppe von Polymeren ausgewählt ist, welche aliphatische, cycloaliphatische und/oder aromatische Monomere umfassende Polyamide, Cyclische Olefin-Copolymere, Polymethylmethacrylat, Polymethylmethacrylimid, Polyester, Polycarbonat sowie Polycarbonatcopolymere und deren Blends, Polystyrol und Acrylnitril-Butadien-Styrol-Polymerisate, Styrolacrylnitril, Acrylnitril-Styrol und andere Styrolcopolymere und deren Blends, Celluloseester, Polyimide und Polyetherimide, Polysulfone und Polyethersulfone, Polyphenylene, Polyacrylate sowie Mischungen oder Blends dieser Polymere umfasst.

Besonders bevorzugt ist ein Kunststoffbauteil, bei welchem die Kunststoff-Formmasse für den Sichtteil zumindest ein transparentes Polymer umfasst, das aus einer Gruppe von Polymeren ausgewählt ist, welche Polyamide oder Copolyamide bzw. deren Mischungen oder Blends umfasst, die aus Monomeren ausgewählt aus folgender Gruppe hergestellt sind:
- verzweigte oder unverzweigte aliphatische Diamine mit 6 bis 14 C-Atomen;
- cycloaliphatische Diamine mit 6 bis 22 C-Atomen;
- araliphatische Diamine mit 8 bis 22 C-Atomen;
- verzweigte oder unverzweigte aliphatische Dicarbonsäuren mit 6 bis 22 C-Atomen;
- cycloaliphatische Dicarbonsäuren mit 6 bis 22 C-Atomen;
- araliphatische Dicarbonsäuren mit 8 bis 22 C-Atomen;
- aromatische Dicarbonsäuren mit 8 bis 22 C-Atomen;
- dimerisierte Fettsäuren mit bis zu 44 C-Atomen;
- Lactame mit 6 bis 12 C-Atomen bzw. entsprechende ω-Aminocarbonsäuren.

Speziell bevorzugt ist ein Kunststoffbauteil, bei welchem die Kunststoff-Formmasse für den Sichtteil zumindest ein transparentes Polymer umfasst, das aus einer Gruppe von Polymeren ausgewählt ist, welche PA MACM 12, PA PACM 12, PA 12/MACMI und PA MACM/PACM 12 sowie Blends derselben umfasst.

Die Kunststoff-Formmasse für den Sichtteil kann zumindest ein Additiv umfassen, das aus der Gruppe der UV-Stabilisatoren, UV-Absorber und deren Mischungen ausgewählt ist. Die Effektpigmente für den Sichtteil sind bevorzugt ausgewählt aus einer Gruppe, die Metallicpigmente - insbesondere ungefärbte oder gefärbte Aluminiumflitter oder Aluminium- bzw. Goldbronze Pigmente -, Interferenzpigmente, Perlglanzpigmente, mineralischen Glimmer und Mischungen davon umfasst.

Das Basisteil, welches üblicherweise zur Befestigung und zum Tragen des Sichtteils (z.B. in Form eines Rahmens), gegebenenfalls zum Tragen einer Leiterplatte, auf welcher die LEDs befestigt und über welche diese LEDs mit Elektrizität versorgt werden und allenfalls zum Abführen der Abwärme der LEDs dient, umfasst bevorzugt ein spritzgussfähiges Polymer, das aus einer Gruppe von Polymeren ausgewählt ist, welche Polyamide, Polyester, Polycarbonate, Polyolefine, sowie thermoplastische Elastomere, Styrolblockcopolymere, Silikone, Acrylnitril-Butadien-Styrol-Polymerisate, PVC bzw. deren Blends oder Recycling-Produkte umfasst.

Als keinesfalls abschliessende Aufzählung werden hier einige bevorzugte Beispiele von Produkten genannt, die mit dem erfindungsgemässen Kunststoff-Formteil hergestellt bzw. ausgestattet werden können:
- Kabinen (wie z.B. Telefonkabinen sowie Fahrgastkabinen für Luftseilbahnen oder Personenaufzüge), Gehäuse, sowie Gehäuseteile und andere Teile von Elektro-, Elektronik-, Telekommunikations-, Sicherheitstechnik-, Medizinaltechnik-, Haushalts- oder Körperpflegegeräten. Solche Geräte umfassen z.B. Kameras, Kaffeemaschinen, Pfannen und deren Deckel, Handys und deren Schalen; Rasierapparate; Stromschalter; Radios, Fernseher und Computer sowie deren Zubehöre, Tasten und Bildschirme; Mixer und Haarföne.
- Sport- und Freizeitgeräte, Modeaccessoires, Spielzeuge oder Teile davon, wie z.B. Skihelme, Fahrrad- und Motorradhelme, usw.
- Designelemente, Funktions- und Funktionsdesignelemente welche innen oder aussen an Bauten, Verkehrswegen oder Fahrzeugen (wie Fahrräder, Motorräder, Kraft- und Schienenfahrzeuge, Schiffe und Flugzeuge) anzubringen sind, wie Deckenplatten, Küchenabdeckungen, Spiegelrahmen, Verkleidungselemente; Brillen, Deckel und/oder Spülkastenabdeckungen für WCs, Beleuchtungskörper; Zierleisten und Zierkappen; Raddeckel, Akustik- und Spiegelschalen, Blinker in Aussenrückspiegelgehäusen und Aussentürgriffen, Blenden, B-Säulenabdeckungen für Autos, Türgriffe, Griffmulden, Spoiler, Antennenabdeckungen, Pannendreiecke und andere Verkehrs-Signale bzw. Signaltafeln.
- Fahrzeugoberflächen, wie Türaussenseiten, Motorhauben und Motorabdeckungen, Gepäckraumabdeckungen, Kofferraumdeckel, Kotflügel, Reserveradabdeckungen, Dächer, Kühlergrill, Hutablagen.
- Möbel und Möbelteile, wie Tischblätter, Schranktüren; Verpackungsteile, wie Deckel von Dosen und Flaschen (z.B. für Getränke), Spraydosen oder Tuben sowie Dosen oder Tuben selbst.

Speziell bevorzugte Verwendungen des erfindungsgemässen Kunststoffbauteils umfassen somit:
- Den Einbau in Fahrzeuge, insbesondere in Funktionsteile, Verkleidungsteile, Designteile oder Funktionsdesignteile vor allem im Automobilbau.
- Den Einbau in Kabinen, Gehäusen, sowie Gehäuseteilen und/oder anderen Teilen von Elektro-, Elektronik-, Telekommunikations-, Sicherheitstechnik-, Medizinaltechnik-, Haushalts- oder Körperpflegegeräten.
- Das Herstellen von Sport- und/oder Freizeitgeräten, Modeaccessoires, Spielzeugen bzw. Teilen davon.
- Das Herstellen von Design-, Funktions-, Funktionsdesign- und/oder Verkleidungselementen an Bauten, Verkehrswegen oder Fahrzeugen.
- Das Herstellen von Möbeln und/oder Verpackungsteilen.

Besonders angeordnete Kunststoffbauteile sind z.B. in eine Seiten- oder Hecktüre eines Fahrzeugs, insbesondere eines Kraftfahrzeugs wie z.B. einem Personenwagen eingebaut. Die LEDs sind dann vorzugsweise in einem Array zum Erzeugen eines Bildes an der äusseren Türoberfläche angeordnet, wobei jede LED gerade einem Pixel eines zu erzeugenden Bildes entspricht. In dieser Weise kann TAXI, ein Taxi-Logo oder ein Signet eines anderen Gewerbebetriebes, wie z.B. eines Pizza-Kuriers an der Türoberfläche werbewirksam erzeugt werden. Befinden sich die betreffenden Türen an einem Ambulanz-Fahrzeug, so kann NOTARZT, ein Malteserkreuz, ein Rotes Kreuz oder ein anderes Bild auf den entsprechenden Oberflächen erzeugt werden. Auch Aufforderungen der Polizei, wie z.B. BITTE ANHALTEN, können an den äusseren Oberflächen von Autotüren oder anderen Karosserieteilen erzeugt werden.

Zum Erzeugen von Bildern eignen sich jedoch auch alle anderen Fahrzeugteile, wie Auto-Kotflügel, Motorhauben, Schiebedächer, Sonnendächer, Kofferraumdeckel und dergleichen; besonders bevorzugt sind dabei auch Radkappen, in welche die erfindungsgemässen Kunststoff-Formteile mit den dazugehörenden LEDs eingebaut sind. Das zu erzeugende Bild kann dabei drahtlos vom Bordcomputer eines Automobils auf einen RFID-Tag (Radiofrequenz-Identifikations-Tag) übertragen werden, der im Inneren der Radkappe angeordnet und mit dem Print verbunden ist, der die LEDs steuert. Das Koordinieren der Radumdrehung mit der Bildgeneration kann z.B. zum Erzeugen von sogenannten "stehenden Bildern" verwendet werden, die nicht der Raddrehung unterworfen sind.

Die erfindungsgemässen Kunststoffbauteile mit ihren integrierten Leuchtelementen können auch beispielsweise im Armaturenbrett oder generell im Inneren von Fahrzeugen zum Anzeigen von bestimmten Betriebszuständen (z.B. Kontrollelemente im Tag/Nacht-Design) oder Gefahren verwendet werden. Insbesondere das ausschliessliche Sichtbarwerden der entsprechenden Anzeigen beim Eintreten dieser bestimmten Betriebszustände oder Gefahren erhöht deren Beachtung und führt wegen ihrer Unsichtbarkeit im Normalzustand nicht zu unnötiger Nervosität oder Ablenkung der das Fahrzeug lenkenden Person.

Die erfindungsgemässen Kunststoffbauteile mit ihren integrierten Leuchtelementen können auch beispielsweise als Temperatur- oder Datums- Warnanzeige an Verpackungen für leichtverderbliche Waren in Kombination mit einem Temperatursensor oder mit einer Uhr verwendet werden. Solche Kunststoffbauteile können auch in Kombination mit einem Temperatursensor als Temperaturanzeige an Pfannen oder Pfannendeckeln zum Kochen empfindlicher Speisen verwendet werden.

## Patentansprüche

1. Kunststoffbauteil mit einem aus einer Kunststoff-Formmasse gebildeten und eine transparente oder translucente Matrix aufweisenden Sichtteil und mit einer unter der Oberfläche des Sichtteils angeordneten Lichtquelle, wobei die Lichtquelle ein oder mehrere Leuchtelemente umfasst, die ausgewählt sind aus einer Gruppe, welche konventionelle Leuchtdioden, organische Leuchtdioden und faseroptische Lichtsysteme umfasst, und wobei der Sichtteil zugemischte, einfallende elektromagnetische Wellen beeinflussende Effektpigmente enthält, **dadurch gekennzeichnet,**
**dass** der Sichtteil als einschichtiges Spritzgussteil ausgebildet ist und eine Sichtfläche sowie eine davon abgewandte Anspritzfläche mit zumindest einer Anspritzstelle aufweist,
**dass** der Sichtteil im wesentlichen Opak gegenüber dem Tageslicht und transparent oder translucent gegenüber dem von den Leuchtelementen ausgestrahlten Licht ausgebildet ist,
**dass** die im Sichtteil vorhandenen Effektpigmente in ihrer Art, Grösse und Konzentration oder Verteilung so ausgewählt und angeordnet sind, dass die optische Wirkung des Kunststoffbauteils bei inaktiver Lichtquelle der optischen Wirkung der übrigen Wand eines Objekts, in welche das Kunststoffbauteil eingebaut ist, weitestgehend entspricht, wobei die Kunststoff-Formmasse des Sichtteils wahlweise beigemischte, an die Wand des Objekts angepasste Farbstoffe umfasst, und dass bei aktiver Lichtquelle die optische Wirkung des Kunststoffbauteils im wesentlichen durch die Lichtquellenaktivität bestimmt ist, und dass die Kunststoff-Formmasse für den Sichtteil zumindest ein transparentes Polymer umfasst, das aus einer Gruppe von Polymeren ausgewählt ist, welche aliphatische, cycloaliphatische und/oder aromatische Monomere umfassende Polyamide, Cyclische Olefin-Copolymere, Polymethylmethacrylimid, Polyester, Polycarbonatcopolymere und deren Blends, Acrylnitril-Butadien-Styrol-Polymerisate, Styrolacrylnitril, Acrylnitril-Styrol und andere Styrolcopolymere und deren Blends, Celluloseester, Polyimide, Polysulfone und Polyethersulfone, Polyphenylene, Polyacrylate sowie Mischungen oder Blends dieser Polymere umfasst, und wobei die Leuchtelemente zumindest teilweise in die Kunststoff-Formmasse des Sichtteils eingebettet sind.

2. Kunststoffbauteil nach Anspruch 1, **dadurch gekennzeichnet, dass** es sich bei den Leuchtelementen um Leuchtdioden handelt.

3. Kunststoffbauteil nach einem der Ansprüche 1 oder 2, **dadurch gekennzeichnet, dass** es einen Sichtteil umfasst, an dessen Rückseite eine Aussparung oder Aussparungen für die Aufnahme des Leuchtelements oder der Leuchtelemente vorhanden sind.

4. Kunststoffbauteil nach einem der Ansprüche 1 bis 3, **dadurch gekennzeichnet, dass** das Kunststoffbauteil ein zusätzliches Basisteil umfasst, welches sich in der Zusammensetzung und in den physikalischen und chemischen Kunststoffeigenschaften vom Sichtteil unterscheidet, wobei das Basisteil des Kunststoffbauteils auf zumindest einen Teil der Anspritzfläche des zuvor erstarrten Sichtteils spritzgegossen ist.

5. Kunststoffbauteil nach Anspruch 4, **dadurch gekennzeichnet, dass** die Kunststoff-Formmasse für das Basisteil ein Polymer umfasst, das mit einem in der Formmasse für den Sichtteil enthaltenen Polymer identisch ist.

6. Kunststoffbauteil nach einem der vorhergehenden Ansprüche, **dadurch gekennzeichnet, dass** die Leuchtelemente zumindest teilweise stoff- und/oder formschlüssig in die Kunststoff-Formmasse des Sichtteils eingebettet sind.

7. Kunststoffbauteil nach einem der vorhergehenden Ansprüche, **dadurch gekennzeichnet, dass** das Kunststoffbauteil mit seiner Sichtfläche oberflächenbündig in die Wand eines Objekts eingebaut ist.

8. Kunststoffbauteil nach einem der vorhergehenden Ansprüche, **dadurch gekennzeichnet, dass** die Lichtquelle als signalgebende Lichtquelle ausgebildet ist, wobei dieses Signal ausgewählt ist aus einer Gruppe, welche Blinklichter sowie das Anzeigen von stehenden oder bewegten Bildern umfasst.

9. Kunststoffbauteil nach einem der vorhergehenden Ansprüche, **dadurch gekennzeichnet, dass** die Lichtquelle Leuchtdioden umfasst, die in einem LED-Modul angeordnet und von einem Rechner oder elektronischen Steuergerät angesteuert sind.

10. Kunststoffbauteil nach einem der vorhergehenden Ansprüche, **dadurch gekennzeichnet, dass** die Kunststoff-Formmasse für den Sichtteil zumindest ein transparentes Polymer umfasst, das aus einer Gruppe von Polymeren ausgewählt ist, welche Polyamide oder Copolyamide bzw. deren Mischungen oder Blends umfasst, die aus Monomeren ausgewählt aus folgender Gruppe hergestellt sind:
- verzweigte oder unverzweigte aliphatische Diamine mit 6 bis 14 C-Atomen;
- cycloaliphatische Diamine mit 6 bis 22 C-Atomen;
- araliphatische Diamine mit 8 bis 22 C-Atomen;
- verzweigte oder unverzweigte aliphatische Dicarbonsäuren mit 6 bis 22 C-Atomen;
- cycloaliphatische Dicarbonsäuren mit 6 bis 22 C-Atomen;
- araliphatische Dicarbonsäuren mit 8 bis 22 C-Atomen;
- aromatische Dicarbonsäuren mit 8 bis 22 C-Atomen;
- dimerisierte Fettsäuren mit bis zu 44 C-Atomen;
- Lactame mit 6 bis 12 C-Atomen bzw. entsprechende ω-Aminocarbonsäuren.

11. Kunststoffbauteil nach einem der vorhergehenden Ansprüche, **dadurch gekennzeichnet, dass** die Kunststoff-Formmasse für den Sichtteil zumindest ein transparentes Polymer umfasst, das aus einer Gruppe von Polymeren ausgewählt ist, welche PA MACM 12, PA PACM 12, PA 12/MACMI und PA MACM/PACM 12 sowie Blends derselben umfasst.

12. Kunststoffbauteil nach einem der vorhergehenden Ansprüche, **dadurch gekennzeichnet, dass** die Kunststoff-Formmasse für den Sichtteil zumindest ein Additiv umfasst, das aus der Gruppe der UV-Stabilisatoren, UV-Absorber und deren Mischungen ausgewählt ist.

13. Kunststoffbauteil nach einem der vorhergehenden Ansprüche, **dadurch gekennzeichnet, dass** die Effektpigmente ausgewählt sind aus einer Gruppe, die Metallicpigmente - insbesondere ungefärbte oder gefärbte Aluminiumflitter oder Aluminium- bzw. Goldbronze Pigmente -, Interferenzpigmente, Perlglanzpigmente, mineralischen Glimmer und Mischungen davon umfasst.

14. Kunststoffbauteil nach einem der Ansprüche 4 bis 13, **dadurch gekennzeichnet, dass** die Kunststoff-Formmasse für das Basisteil zumindest ein spritzgussfähiges Polymer umfasst, das aus einer Gruppe von Polymeren ausgewählt ist, welche Polyamide, Polyester, Polycarbonate, Polyolefine, thermoplastische Elastomere, Styrolblockcopolymere, Silikone, Acrylnitril-Butadien-Styrol-Polymerisate, PVC sowie deren Blends und Recycling-Produkte umfasst.

15. Verwendung des Kunststoffbauteils gemäss einem der Ansprüche 1 bis 14 zum Einbau in Fahrzeuge, insbesondere in Funktions-, Verkleidungs-, Design- oder Funktionsdesignteile von Fahrzeugen, vor allem im Automobilbau.

16. Verwendung des Kunststoffbauteils gemäss einem der Ansprüche 1 bis 14 zum Einbau in Kabinen, Gehäusen, sowie Gehäuseteilen und/oder anderen Teilen von Elektro-, Elektronik-, Telekommunikations-, Sicherheitstechnik-, Medizinaltechnik-, Haushalts- oder Körperpflegegeräten.

17. Verwendung des Kunststoffbauteils gemäss einem der Ansprüche 1 bis 14 zum Herstellen von Sport- und/oder Freizeitgeräten, Modeaccessoires, Spielzeugen bzw. Teilen davon.

18. Verwendung des Kunststoffbauteils gemäss einem der Ansprüche 1 bis 14 zum Herstellen von Design-, Funktions-, Funktionsdesign und/oder Verkleidungsteilen an Bauten, Verkehrswegen oder Fahrzeugen.

19. Verwendung des Kunststoffbauteils gemäss einem der Ansprüche 1 bis 14 zum Herstellen von Möbeln oder Verpackungsteilen.

## Claims

1. A plastic component having a visible part, which is formed from a plastic molding material and comprises a transparent or translucent matrix, and having a light source arranged under the surface of the visible part, wherein the light source comprises one or more lighting elements, which are selected from a group which comprises conventional light-emitting diodes, organic light-emitting diodes, and fiber-optic light systems, and wherein the visible part contains admixed effect pigments which influence incident electromagnetic waves,
**characterized in that** the visible part is implemented as a single-layer injection molded part and has a visible surface and also an injection surface facing away therefrom having at least one injection point,
the visible part is implemented to be substantially opaque in relation to daylight and transparent or translucent in relation to light emitted by the lighting elements,
the effect pigments provided in the visible part are selected and arranged in their type, size, and concentration or distribution so that the optical effect of the plastic component, when the light source is inactive, substantially corresponds to the optical effect of the remaining wall of an object in which the plastic component is installed, wherein the plastic molding material of the visible part optionally comprises admixed colorants which are adapted to the wall of the object, and when the light source is active, the optical effect of the plastic component is substantially determined by the light source activity, and
the plastic molding material for the visible part comprises at least one transparent polymer which is selected from a group of polymers which comprises polyamides comprising aliphatic, cycloaliphatic, and/or aromatic monomers, cyclic olefin copolymers, polymethyl methacrylamide, polyesters, polycarbonate copolymers and the blends thereof, acrylonitrile-butadiene-styrene polymers, styrene acrylonitrile, acrylonitrile styrene, and other styrene copolymers and the blends thereof, cellulose esters, polyimides, polysulfones, and polyether sulfones, polyphenylenes, polyacrylates, and mixtures or blends of these polymers, and wherein the lighting elements are at least partially embedded in the plastic molding material of the visible part.

2. The plastic component according to Claim 1, **characterized in that** the lighting elements are light-emitting diodes.

3. The plastic component according to one of Claims I or 2, **characterized in that** it comprises a visible part, on the rear side of which a recess or recesses is/are provided for accommodating the lighting element or the lighting elements.

4. The plastic component according to one of Claims 1 to 3, **characterized in that** the plastic component comprises an additional base part, which differs in the composition and in the physical and chemical plastic properties from the visible part, wherein the base part of the plastic component is injection molded on at least a part of the injection surface of the previously solidified visible part.

5. The plastic component according to Claim 4, **characterized in that** the plastic molding material for the base part comprises a polymer, which is identical to a polymer contained in the molding material for the visible part.

6. The plastic component according to one of the preceding claims, **characterized in that** the lighting elements are at least partially embedded in an integrally-joined and/or form-fitted manner in the plastic molding material of the visible part.

7. The plastic component according to one of the preceding claims, **characterized in that** the plastic component is installed having its visible surface surface-flush with the wall of an object.

8. The plastic component according to one of the preceding claims, **characterized in that** the light source is implemented as a signal-providing light source, wherein this signal is selected from a group which comprises flashing lights and also the display of stationary or moving images.

9. The plastic component according to one of the preceding claims, **characterized in that** the light source comprises light-emitting diodes, which are situated in an LED module and which are activated by a computer or electronic control unit.

10. The plastic component according to one of the preceding claims, **characterized in that** the plastic molding material for the visible part comprises at least one transparent polymer, which is selected from a group of polymers, which comprises polyamides or copolyamides or the mixtures or blends thereof, which are produced from monomers selected from the following group:
- branched or unbranched aliphatic diamines having 6 to 14 C atoms;
- cycloaliphatic diamines having 6 to 22 C atoms;
- araliphatic diamines having 8 to 22 C atoms;
- branched or unbranched aliphatic dicarboxylic acids having 6 to 22 C atoms;
- cycloaliphatic dicarboxylic acids having 6 to 22 C atoms;
- araliphatic dicarboxylic acids having 8 to 22 C atoms;
- aromatic dicarboxylic acids having 8 to 22 C atoms;
- dimerized fatty acids having up to 44 C atoms;
- lactams having 6 to 12 C atoms or corresponding ω-amino carboxylic acids.

11. The plastic component according to one of the preceding claims, **characterized in that** the plastic molding material for the visible part comprises at least one transparent polymer, which is selected from a group of polymers, which comprises PA MACM 12, PA PACM 12, PA 12/MACMI, and PA MACM/PACM 12 and blends thereof.

12. The plastic component according to one of the preceding claims, **characterized in that** the plastic molding material for the visible part comprises at least one additive, which is selected from the group of UV stabilizers, UV absorbers, and the mixtures thereof.

13. The plastic component according to one of the preceding claims, **characterized in that** the effect pigments are selected from a group which comprises metallic pigments - in particular non-colored or colored aluminum glitter or aluminum-bronze or gold-bronze pigments - interference pigments, pearlescent pigments, mineral glitter, and mixtures thereof.

14. The plastic component according to one of Claims 4 to 13, **characterized in that** the plastic molding material for the base part comprises at least one polymer capable of injection molding, which is selected from a group of polymers, which comprises polyamides, polyesters, polycarbonates, polyolefins, thermoplastic elastomeric materials, styrene block copolymers, silicones, acrylonitrile-butadiene-styrene polymers, PVC, and the blends and recycling products thereof.

15. A use of the plastic component according to one of Claims 1 to 14 for installation in vehicles, in particular in functional, paneling, design, or functional design parts of vehicles, above all in automotive construction.

16. A use of the plastic component according to one of Claims 1 to 14 for installation in cabins, housings, and housing parts and/or other parts of electrical, electronic, telecommunications, security technology, medical technology, domestic, or personal-care appliances.

17. A use of the plastic component according to one of Claims 1 to 14 for producing sports and/or leisure time devices, fashion accessories, toys, or parts thereof.

18. A use of the plastic component according to one of Claims 1 to 14 for producing design, functional, functional design, and/or paneling parts of structures, traffic routes, or vehicles.

19. A use of the plastic component according to one of Claims 1 to 14 for producing furniture or packaging parts.

## Revendications

1. Elément polymère comprenant une partie visible constituée d'une matière à mouler et présentant une matrice transparente ou translucide et comprenant une source de lumière agencée sous la surface de la partie visible, la source de lumière comprenant un ou plusieurs éléments d'éclairage qui sont sélectionnés à partir d'un groupe comprenant des diodes électroluminescentes conventionnelles, des diodes électroluminescentes organiques et des systèmes d'éclairage à fibre optique, et la partie visible contenant des pigments à effet mélangés influençant les ondes électromagnétiques incidentes, **caractérisé en ce que**
la partie visible est réalisée sous la forme d'une pièce moulée par injection monocouche et présente une surface visible et une surface d'injection opposée avec au moins un point d'injection,
**en ce que** la partie visible est réalisée essentiellement opaque à la lumière du jour et transparente ou translucide à la lumière émise par les éléments d'éclairage,
**en ce que** les pigments à effet présents dans la partie visible sont choisis et agencés dans leur nature, leur taille et leur concentration ou répartition de façon à ce que l'effet optique de l'élément polymère, en cas de source de lumière inactive, corresponde dans une large mesure à l'effet optique du reste de la paroi d'un objet dans laquelle l'élément polymère est monté, la matière à mouler polymère de la partie visible comprenant des colorants mélangés au choix adaptés à la paroi de l'objet, et de façon à ce que, en cas de source lumineuse active, l'effet optique de l'élément polymère soit essentiellement déterminé par l'activité des sources lumineuses,
et **en ce que** la matière à mouler polymère pour la partie visible comprend au moins un polymère transparent qui est sélectionné à partir d'un groupe de polymères qui comprend des polyamides comprenant des monomères aliphatiques, cycloaliphatiques et/ou aromatiques, des copolymères d'oléfine cycliques, le polyméthylméthacrylimide, des polyesters, des copolymères de polycarbonate et leurs mélanges, des polymérisats acrylonitrile-butadiène-styrène, le styrène acrylonitrile, l'acrylonitrile-styrène et autres copolymères de styrène et leurs mélanges, des esters de cellulose, des polyimides, des polysulfones et des polyéthersulfones, des polyphénylènes, des polyacrylates et les mélanges de ces polymères, les éléments d'éclairage étant au moins partiellement encastrés dans la matière à mouler polymère de la partie visible.

2. Elément polymère selon la revendication 1, **caractérisé en ce que** les éléments d'éclairage sont des diodes électroluminescentes.

3. Elément polymère selon l'une des revendications 1 ou 2, **caractérisé en ce qu'**il comprend une partie visible sur le derrière de laquelle il y a un évidement ou des évidements destiné(s) à recevoir l'élément d'éclairage ou les éléments d'éclairage.

4. Elément polymère selon l'une des revendications 1 à 3, **caractérisé en ce que** l'élément polymère comprend une partie de base supplémentaire qui se différencie de la partie visible de par sa composition et ses propriétés physiques et chimiques, la partie de base de l'élément polymère étant moulée par injection sur au moins une partie de la surface d'injection de la partie visible préalablement solidifiée.

5. Elément polymère selon la revendication 4, **caractérisé en ce que** la matière à mouler polymère pour la partie de base comprend un polymère qui est identique à un polymère contenu dans la matière à mouler pour la partie visible.

6. Elément polymère selon l'une des revendications précédentes, **caractérisé en ce que** les éléments d'éclairage sont encastrés au moins partiellement par correspondance de matière et/ou par correspondance de forme dans la matière à mouler polymère de la partie visible.

7. Elément polymère selon l'une des revendications précédentes, **caractérisé en ce que** l'élément polymère est monté avec sa surface visible plane avec la surface de la paroi d'un objet.

8. Elément polymère selon l'une des revendications précédentes, **caractérisé en ce que** la source de lumière est réalisée sous la forme d'une source de lumière émettant un signal, ce signal étant sélectionné à partir d'un groupe comprenant des voyants clignotants et l'affichage d'images fixes ou mobiles.

9. Elément polymère selon l'une des revendications précédentes, **caractérisé en ce que** la source de lumière comprend des diodes électroluminescentes qui sont agencées dans un module à LED et qui sont commandées par un ordinateur ou par un appareil de commande électronique.

10. Elément polymère selon l'une des revendications précédentes, **caractérisé en ce que** la matière à mouler polymère pour la partie visible comprend au moins un polymère transparent qui est sélectionné à partir d'un groupe de polymères qui comprend des polyamides ou des copolyamides ou leurs mélanges, qui sont composés à partir de monomères sélectionnés à partir des groupes suivants :
- Diamines aliphatiques ramifiées ou non ramifiées ayant 6 à 14 atomes C
- Diamines cycloaliphatiques ayant 6 à 22 atomes C ;
- Diamines araliphatiques ayant 8 à 22 atomes C ;
- Acides dicarboxyliques aliphatiques ramifiés ou non ramifiés ayant 6 à 22 atomes C ;
- Acides dicarboxyliques cycloaliphatiques ayant 6 à 22 atomes C ;
- Acides dicarboxyliques araliphatiques ayant 8 à 22 atomes C ;
- Acides dicarboxyliques aromatiques ayant 8 à 22 atomes C ;
- Acides gras dimérisés ayant jusqu'à 44 atomes C ;
- Lactames ayant 6 à 12 atomes C ou acides aminocarboxyliques ω correspondants.

11. Elément polymère selon l'une des revendications précédentes, **caractérisé en ce que** la matière à mouler polymère pour la partie visible comprend au moins un polymère transparent qui est sélectionné à partir d'un groupe de polymères qui comprend PA MACM 12, PA PACM 12, PA 12/MACMI et PA MACM/PACM 12 et leurs mélanges.

12. Elément polymère selon l'une des revendications précédentes, **caractérisé en ce que** la matière à mouler polymère pour la partie visible comprend au moins un additif qui est sélectionné à partir du groupe des stabilisateurs UV, des absorbeurs UV et leurs mélanges.

13. Elément polymère selon l'une des revendications précédentes, **caractérisé en ce que** les pigments à effet sont sélectionnés à partir d'un groupe comprenant des pigments métalliques - en particulier des fragments d'aluminium non colorés ou colorés ou des pigments d'aluminium ou de bronze d'or -, des pigments d'interférence, des pigments nacrés, des micas minéraux et des mélanges de ces derniers.

14. Elément polymère selon l'une des revendications 4 à 13, **caractérisé en ce que** la matière à mouler polymère pour la partie de base comprend au moins un polymère moulable par injection qui est sélectionné à partir d'un groupe de polymères comprenant des polyamides, des polyesters, des polycarbonates, des polyoléfines, des élastomères thermoplastiques, des copolymères en masse de styrène, des silicones, des polymérisats acrylonitrile-butadiène-styrène, le PVC et leurs mélanges et produits de recyclage.

15. Utilisation de l'élément polymère selon l'une des revendications 1 à 14 pour un montage dans des véhicules, en particulier dans des parties fonctionnelles, d'habillage, de design ou de design fonctionnel de véhicules, en particulier dans l'industrie automobile.

16. Utilisation de l'élément polymère selon l'une des revendications 1 à 14 pour un montage dans des cabines, boîtiers, ainsi que des parties de boîtier et/ou autres parties d'appareils électriques, électroniques, de télécommunication, de techniques de sécurité, de techniques médicales, électroménagers ou appareils de soin corporel.

17. Utilisation de l'élément polymère selon l'une des revendications 1 à 14 pour la fabrication d'appareils de sport et/ou de loisirs, d'accessoires de mode, de jouets ou de pièces de ces derniers.

18. Utilisation de l'élément polymère selon l'une des revendications 1 à 14 pour la fabrication de pièces de design, de fonctionnement, de design fonctionnel et/ou de pièces d'habillage pour des bâtiments, des routes ou des véhicules.

19. Utilisation de l'élément polymère selon l'une des revendications 1 à 14 pour la fabrication de meubles ou de parties d'emballage.
